(19) Europäisches Patentamt
European Patent Office
Office européen des brevets

(11) **EP 1 637 424 B1**

(12) **EUROPÄISCHE PATENTSCHRIFT**

(45) Veröffentlichungstag und Bekanntmachung des Hinweises auf die Patenterteilung:
**07.10.2009   Patentblatt 2009/41**

(51) Int Cl.:
***B60W 10/00*** *(2006.01)*

(21) Anmeldenummer: **05016635.4**

(22) Anmeldetag: **30.07.2005**

(54) **Verfahren und Vorrichtung zum Regeln der Fahrstabilität eines Kraftfahrzeugs**

Method and device for regulating the drive stability of a vehicle

Procédé et dispositif pour la régulation de la stabilité de conduite d'un véhicule

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **19.08.2004   DE 102004040203**

(43) Veröffentlichungstag der Anmeldung:
**22.03.2006   Patentblatt 2006/12**

(73) Patentinhaber: **LuK Lamellen und Kupplungsbau Beteiligungs KG**
**77815 Bühl (DE)**

(72) Erfinder:
• **Eggert, Thomas, Dr.**
  **76131 Karlsruhe (DE)**
• **Moosheimer, Johannes, Dr.**
  **77815 Bühl (DE)**

(56) Entgegenhaltungen:
| | |
|---|---|
| **EP-A- 0 338 141** | **DE-A1- 3 605 600** |
| **DE-A1- 10 236 292** | **DE-A1- 10 247 970** |
| **DE-A1- 19 653 935** | **DE-A1- 19 735 451** |
| **DE-A1- 19 747 925** | **DE-A1- 19 939 442** |
| **FR-A- 2 828 660** | |

**Beschreibung**

Die Erfindung betrifft ein Verfahren und eine Vorrichtung zum Regeln der Fahrstabilität eines Kraftfahrzeugs.

Elektronische Fahrstabilitätssysteme, bei denen ein Blockieren oder Durchdrehen von Fahrzeugrädern verhindert wird und/oder das auf einzelne Räder wirkende Antriebs- oder Bremsmoment derart gesteuert wird, dass ein Schleudern des Fahrzeugs insgesamt vermieden wird, werden in modernen Kraftfahrzeugen zur Erhöhung der Fahrsicherheit zunehmend eingesetzt.

Aus der DE 198 50 978 A1 ist beispielsweise bekannt, eine automatische Kupplung bei einem Signal, das die Aktivierung eines elektronischen Stabilisierungssystems anzeigt, in vorbestimmter Weise zu betätigen. Beispielsweise kann die Kupplung verlangsamt aus einer aktuellen Einrückposition in ihre vollständig eingerückte Position betätigt werden, so dass keine ungewollten Reaktionen eingeleitet werden, die der elektronischen Stabilisierungssteuerung entgegenwirken. Alternativ kann die Kupplung in ihrer aktuellen Einrückposition belassen werden, um keine ungewollten Reaktionen einzuleiten, die der Steuerung des elektronischen Stabilisierungssystems entgegenwirken. Bei einer weiteren Ausführungsform kann die Kupplung bei Vorliegen des eine Aktivierung der elektronischen Stabilisierung anzeigenden Signals verlangsamt aus der aktuellen Einrückposition in eine weiter ausgerückte Position gebracht werden, so dass eine geschlossene Kupplung zumindest teilweise schlupfend betrieben wird, was für die Tätigkeit des elektronischen Stabilisierungssystems vorteilhaft ist.

Aus der DE 101 57 506 A1 ist eine Steuereinrichtung zur Steuerung der Fahrzeugstabilität bekannt, bei der bei aktiviertem Fahrzeugstabilisierungssystem das von der Kupplung übertragbare Moment abgesenkt wird.

Die DE 199 39 442 A1 offenbart ein Verfahren zum Ansteuern einer automatischen Kupplung gemäß dem Oberbegriff des Anspruchs 1, bei dem das Kupplungsmoment an ein Radschlupfmoment angepasst wird.

Der Erfindung liegt die Aufgabe zugrunde, ein Verfahren und eine Vorrichtung zum Regeln der Fahrstabilität eines Kraftfahrzeugs zu schaffen, mit dem bzw. der die Fahrsicherheit weiter verbessert wird.

Die das Verfahren betreffende Erfindungsaufgabe wird mit den Merkmalen des Anspruchs 1 gelöst.

Erfindungsgemäß ist die Kupplungssteuerung unmittelbar aktiver Bestandteil der elektronischen Fahrstabilisierung, indem der Schlupf der angetriebenen Räder unmittelbar durch Steuerung des von der Kupplung übertragbaren Moments zumindest mitbeeinflusst wird. Auf diese Weise dient beispielsweise ein Lösen der Kupplung nicht nur dazu, den Betrieb eines elektronischen Fahrstabilisierungssystems, wie ABS-System, ASR-System oder ESP-System zu erleichtern, indem störende Einflüsse beseitigt werden, sondern ist im Gegenteil in bestimmten Betriebssituationen unmittelbarer aktiver Bestandteil solcher Systeme zur Regelung des Schlupfes der angetriebenen Räder.

Die Unteransprüche sind auf vorteilhafte Durchführungsformen des erfindungsgemäßen Verfahrens gerichtet, wie es insbesondere im Schubbetrieb eingesetzt wird.

Beispielsweise wird ein Blockieren der angetriebenen Räder im Schubbetrieb durch Vermindern des von der Kupplung übertragbaren Moments verhindert.

Dabei wird vorteilhafterweise die Drehzahldifferenz zwischen einem nicht angetriebenen und einem angetriebenen Rad ermittelt und wird das von der Kupplung übertragbare Moment derart gesteuert, dass eine vorbestimmte Drehzahldifferenz nicht überschritten wird.

Besonders vorteilhaft ist, die Drehzahldifferenz zwischen einem nicht angetriebenen und einem angetriebenen Rad zu ermitteln und das von der Kupplung übertragbare Moment derart zu steuern, dass eine bestimmte relative Drehzahldifferenz nicht überschritten wird.

Alternativ oder zusätzlich kann die Winkelverzögerung eines angetriebenen Rades ermittelt werden und das von der Kupplung übertragbare Moment derart gesteuert werden, dass eine vorbestimmte Winkelverzögerung nicht überschritten wird.

In weiterer Ausbildung des erfindungsgemäßen Verfahrens kann das übertragbare Kupplungsmoment entsprechend einem Ausgangssignal eines Steuergerätes zum Erfassen von Fahrzuständen gesteuert werden.

Die Unteransprüche sind auf Durchführungsformen des Verfahrens gerichtet, wie sie insbesondere bei von seiner Antriebsmaschine angetriebenem Kraftfahrzeug eingesetzt werden.

Eine vorteilhafte Durchführungsform eines solchen Verfahrens zum Regeln der Fahrstabilität eines Kraftfahrzeugs sieht vor, dass abhängig vom jeweiligen Betriebszustand des Kraftfahrzeugs das von einer zwischen einem Antriebsmotor und angetriebenen Rädern des Kraftfahrzeugs angeordneten automatisierten Kupplung übertragbare Moment verändert wird.

Dabei ist vorgesehen, dass ein Schlupf der angetriebenen Räder unmittelbar durch Steuerung des von der Kupplung übertragbaren Moments geregelt wird, wobei der Schlupf wenigstens eines angetriebenen Rades, der Schlupf der Kupplung und das Schlupfmoment des wenigstens einen angetriebenen Rades ermittelt werden. Das von der Kupplung übertragbare Moment wird derart vorgesteuert, dass es dem ermittelten Schlupfmoment des wenigstens einen angetriebenen Rades etwa gleich ist und der Vorsteuerung eine Regelung zum Abbau des Schlupfes des wenigstens einen angetriebenen Rades überlagert wird.

Vorteilhafterweise erfolgt die Regelung des Schlupfes des wenigstens einen angetriebenen Rades durch Steuerung des Kupplungsmoments mit Hilfe eines PI-Reglers.

Alternativ kann die Steuerung des Kupplungsmoments unter Regelung der Drehzahl des wenigstens einen angetriebenen Rades auf eine Zieldrehzahl erfolgen.

Mit Vorteil wird nach Abbau des Radschlupfes das Kupplungsmoment zeitgesteuert vergrößert und erfolgt der Abbau des Radschlupfes durch Vermindern des Kupplungsmoments erneut, sobald der Radschlupf einen vorbestimmten Wert übersteigt.

Dabei kann der Wert des maximalen Kupplungsmoments, bei dem im Wesentlichen kein Radschlupf auftritt, gespeichert werden.

Vorteilhafterweise erfolgt ein Steuern des von der Kupplung übertragbaren Moments derart, dass die Winkelbeschleunigung des mindestens einen angetriebenen Rades einen von dem Schlupfmoment abhängigen Wert annimmt.

Während der Veränderung bzw. Steuerung des von der Kupplung übertragbaren Moments erfolgt ein Motoreingriff vorteilhafterweise derart, dass die Motordrehzahl während der Veränderung des von der Kupplung übertragbaren Moments zumindest annähernd konstant bleibt.

Vorteilhafterweise kann das von dem mindestens einem angetriebenen Rad übertragene Moment zur Steuerung wenigstens einer weiteren Einstellung eines Fahrzeugparameters verwendet werden.

Eine Vorrichtung zum Regeln der Fahrstabilität eines Kraftfahrzeugs enthält eine zwischen einem Antriebsmotor des Kraftfahrzeugs und wenigstens einem angetriebenen Rad angeordnete Kupplung, deren übertragbares Moment mittels eines Aktors verstellbar ist, Sensoren zur Ermittlung des Schlupfes des wenigstens einen angetriebenen Rades, Sensoren zur Ermittlung des Schlupfes der Kupplung und eine elektronische Steuereinrichtung, die den Aktor der Kupplung zur Durchführung eines oder mehrerer der vorgenannten Verfahren steuert.

Die Erfindung wird im Folgenden anhand schematischer Zeichnungen beispielsweise und mit weiteren Einzelheiten erläutert.

In den Figuren stellen dar:

Fig. 1 eine Prinzipdarstellung eines Antriebsstrangs eines Kraftfahrzeugs mit Einheiten zu dessen Steuerung und
Fig. 2 ein Blockschaltbild zur Erläuterung der Durchführung eines erfindungsgemäßen Verfahrens.

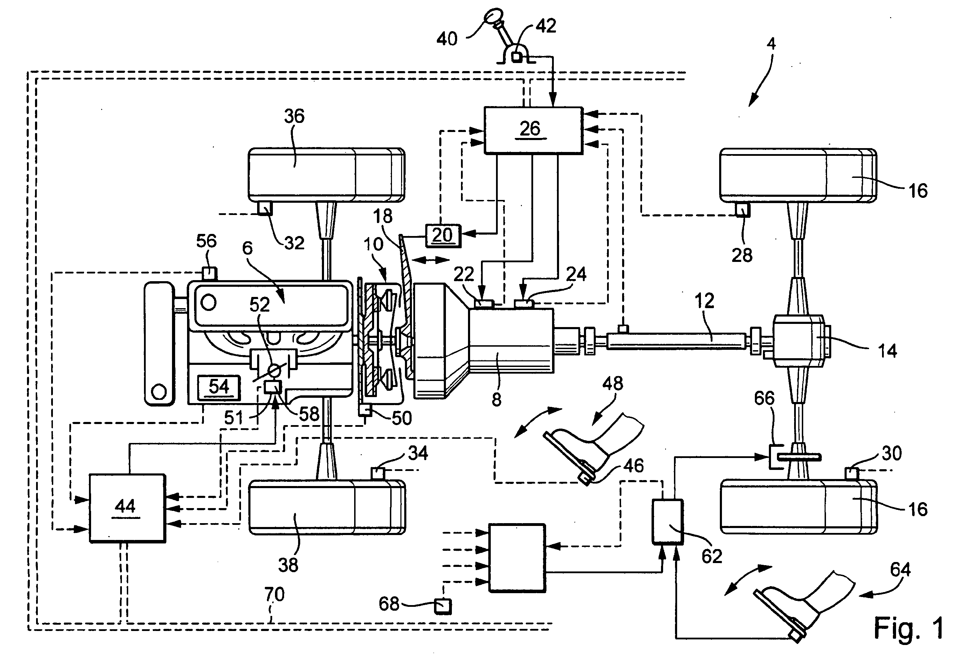

Gemäß Figur 1 weist ein insgesamt mit 4 bezeichnetes Kraftfahrzeug einen Antriebsmotor 6 auf, der mit einem Getriebe 8 über eine Kupplung 10 verbunden ist. Die Kupplung 10 ist vorteilhafterweise selbst nachstellend, d.h. der Verschleiß von Reibbelägen der Kupplung wird derart ausgeglichen, dass eine konstante, geringe Ausrückkraft gewährleistet ist. Solche Reibungskupplungen sind beispielsweise in der DE 42 39 291 A1, DE 42 39 289 A1 und DE 43 06 505 A1 beschrieben.

Der Getriebeausgang ist über eine Kardanwelle 12 und ein Differential 14 mit den im dargestellten Beispiel angetriebenen Hinterrädern 16 des Kraftfahrzeugs verbunden.

Die Kupplung 10, die gedrückt oder gezogen ausgeführt sein kann, wird über eine Betätigungshebel 18 von einem Aktor 20 betätigt.

Das Getriebe, im dargestellten Beispiel ein automatisiertes Handschaltgetriebe, wird mittels zweier Aktoren 22 und 24 betätigt, deren einer eine Wählbetätigung und deren anderer eine Schaltbetätigung durchführt.

Die Aktoren 20, 22 und 24 werden von einer elektronischen Getriebesteuereinheit 26 gesteuert, die mit Raddrehzahlsensoren 28, 30 der angetriebenen Hinterräder sowie Raddrehzahlen 32 und 34 der nicht angetriebenen Vorderräder 36 und 38 verbunden ist. Weiter ist die Getriebesteuereinheit 26 mit in den jeweiligen Aktoren 20, 22 und 24 enthaltenen Positionsgebern verbunden, so dass die jeweilige Stellung eines zugehörigen Betätigungsgliedes bekannt ist. Einzelne Fahrprogramme können mit Hilfe eines Wählhebels 40 angewählt werden, dessen Stellung mittels eines Stellungsgebers 42 zur Getriebesteuereinheit 26 übertragen wird.

Die Positionsgeber der Aktoren 20, 22 und 24 sind üblicherweise als Inkrementalgeber ausgeführt, mit Hilfe derer die jeweilige Aktorposition in Bezug auf einen Referenzpunkt bestimmt werden kann. Eine Bestimmung der Aktorposition ist insbesondere für den Kupplungsaktor 20 wichtig, da der Greifpunkt der Kupplung 4 einer bestimmten Stellung des Betätigungshebels 18 zugeordnet ist und sich das jeweils von der Kupplung übertragbare Moment an dem weiteren Betätigungsweg des Betätigungshebels 18, ausgehend vom Greifpunkt, orientiert. Vorteilhaft wird der Greifpunkt der Kupplung 10 deshalb bei Inbetriebnahme und während des Betriebs wiederholt neu bestimmt.

Zur Steuerung des Antriebsmotors 6 ist ein Motorsteuergerät 44 vorgesehen, dessen Eingänge mit einem Sensor 46 zur Erfassung der Stellung eines Fahrpedals 48, einem Sensor 50 zur Erfassung der Drehzahl der Kurbelwelle bzw. der Kupplungseingangsdrehzahl, einem Positionsgeber 51 zur Erfassung der Stellung eines Laststellgliedes 52, einem Durchflusssensor 54 zum Erfassen des Luftdurchsatzes des Antriebsmotors, einem Temperatursensor 56 sowie gegebenenfalls weiteren Sensoren verbunden. Das Motorsteuergerät 18 steuert einen Aktor 58, der das Laststellglied 52 betätigt.

Weiter enthält der Antriebsstrang ein ABS-Steuergerät 60, mit Hilfe dessen ein Blockieren der Fahrzeugräder bei einer Bremsbetätigung verhinderbar ist. Eingänge des ABS-Steuergerätes 60 sind beispielsweise mit den Raddrehzahlsensoren verbunden. Bei einer Blockiererkennung liefert das Steuergerät 60 ein Ausgangssignal an ein Bremssteuergerät 62, das einen durch Betätigung eines Bremspedals 64 hervorgerufenen Bremsdruck im Bremssystem derart moduliert, dass die Radbremsen 66 nicht blockieren. Mit Hilfe weiterer Sensoren, beispielsweise eines Sensors 68 zum Erfassen von Drehungen des Fahrzeugs um eine senkrechte Achse, eines Lenkwinkels usw. kann das Steuergerät 60 zu einem Fahrstabilitätssteuergerät ergänzt werden.

Die Steuergeräte 18, 26 und 60 kommunizieren über ein Bus-System 70 miteinander, so dass ein umfassender bidirektionaler Datentausch möglich ist, innerhalb dessen beispielsweise das Steuergerät 60 Aktivitäten des Steuergeräts 44 und umgekehrt auslöst.

Aufbau und Funktion der beschriebenen Einheiten sind an sich bekannt und werden daher nicht im Einzelnen erläutert. Der Fahrzeugantriebsstrang ist nur beispielhaft dargestellt und kann in unterschiedlichster Weise abgeändert sein. Beispielsweise kann das Getriebe ein manuell betätigtes Getriebe sein, wobei nur die Kupplung automatisiert ist. Das Getriebe kann ein konventionelles automatisches Getriebe mit Planetensätzen sein oder ein Getriebe mit kontinuierlich veränderbarer Übersetzung. Das Fahrzeug kann Vorderradantrieb oder Allradantrieb haben usw.

Im Folgenden werden erfindungsgemäße Weiterbildungen insbesondere der Steuerungen des beispielhaft geschilderten Antriebsstrangs erläutert:

Wenn das Fahrzeug auf Oberflächen mit geringer Haftung, beispielsweise vereisten Oberflächen, bewegt wird, kann es im Schubbetrieb zu einem Blockieren der angetriebenen Räder kommen, wenn das über die Kupplung vom Motor auf die angetriebenen Räder übertragene Schubmoment größer ist als das von den Rädern auf die Fahrbahn übertragbare Reibmoment.

Um ein Blockieren der angetriebenen Räder in solchen Situationen zu verhindern, wird erfindungsgemäß die Kupplung gezielt so weit geöffnet, dass sie schlupft und das von ihr übertragbare. Moment derart abgesenkt wird, dass das Radmoment $+M_{Rad}$ kleiner ist als die Summe aus dem Reifenreibmoment $M_{Reib}$ (vom Rad auf die Straße übertragenes Moment) und dem dynamischen Reifenmoment $J\ddot{\varphi}$, das durch Drehzahländerungen des Rades bedingt ist. Um ein Blockieren des Rades zu verhindern, muss somit die Beziehung erfüllt sein (alle Momente negativ):

$$M_{Rad} < M_{Reib} + J\ddot{\varphi}_{Rad} \tag{$\aleph$}$$

Das Radmoment hängt bei einem zweiradgetriebenen Fahrzeug vom übertragenen Kupplungsmoment $M_{üK}$ in folgender Weise ab:

$$M_{Rad} = \frac{M_{üK} * i_{ges}}{2} * \eta, \tag{$\Im$}$$

wobei iges die zwischen der Kupplung und dem Rad wirksame Gesamtübersetzung ist und $\eta$ der Wirkungsgrad des betroffenen Antriebsstrangs ist, der beispielsweise bei etwa 0,95 liegt.

Durch Anheben von $M_{üK}$ kann $M_{Rad}$ soweit angehoben werden (beitragsmäßig verringert werden), dass das Rad weiterhin dreht.

Zum Erkennen einer Blockiergefahr und die Strategie zur Steuerung der Kupplung gibt es beispielsweise folgende Möglichkeiten:

Variante A:

Um die Situation zu erfassen und dann erforderlichenfalls das Kupplungsmoment zu steuern, kann bei zweiradgetriebenen Fahrzeugen der Bremsschlupf S zwischen den angetriebenen und den nicht angetriebenen Rädern erfasst werden:

$$S = \frac{\dot{\varphi}_{ungetr.} - \dot{\varphi}_{getr.}}{\dot{\varphi}_{ungetr.}}$$

$$\mathfrak{R}$$

.

Wenn S einen kritischen Schlupfwert Sc übersteigt, kommt es zum Blockieren und das Rad kann keine Seitenführung mehr übernehmen. Ein für Sc angenommener Wert kann beispielsweise bei 0,1 liegen.

Die Raddrehzahlen $\dot{\varphi}$ können über die entsprechenden Radsensoren erfasst werden, so dass S ermittelt werden kann. Mittels einer beispielsweise in der Getriebesteuereinheit 26 implementierten Regelstrategie kann der Schlupf S durch entsprechende Ansteuerung des Aktors 20 derart geregelt werden, dass S unter dem kritischen Wert Sc bleibt. Dabei kann es insbesondere vorteilhaft sein, S auf einen Wert nahe Sc zu regeln, damit ein den jeweiligen Verhältnissen entsprechendes möglichst großes Bremsmoment des Motors auf die Räder übertragen werden kann, ohne dass es zu einem gefährlichen Fahrzustand kommt.

Wenn der Schlupf S beispielsweise beim Einkuppeln nach einer Rückschaltung oder beim Bremsen mit einem Motorschubmoment von -50 Nm über 0,1 ansteigt, wird die Kupplung geregelt geöffnet, so dass das Radmoment derart verändert wird, dass S kleiner als 0,1 bleibt. Der Absolutbetrag des übertragenen Kupplungsmoments liegt somit während der Regelung bzw. wenn das Fahrzeug auf einer Fahrbahn fährt, bei der ein Kupplungsmoment von 50 Nm zu einem Blockieren führen würde, unter 50 Nm.

Variante B:

Bei Allrad-getriebenen Fahrzeugen gibt es normalerweise keinen Schlupf zwischen angetriebenen und nicht angetriebenen Rädern. Hier kann als Führungsgröße für das Kupplungsmoment die Winkelbeschleunigung $\ddot{\varphi}_{Rad}$ verwendet werden. Bei drohendem Blockieren des Rades wird $\ddot{\varphi}_{Rad}$ schlagartig negativ. Das Kupplungsmoment wird dann derart eingestellt, dass $\ddot{\varphi}_{Rad}$ über einer "Abrissschwelle" $\ddot{\varphi}_{Rad,c}$ bleibt. Es versteht sich, dass diese Vorgehensweise auch bei zweiradgetriebenen Fahrzeugen möglich ist.

Variante C:

Eine kritische Situation mit Blockiergefahr kann auch von einem externen Steuergerät, beispielsweise dem Steuergerät 60 oder dem Steuergerät 26, erkannt werden, wenn beispielsweise die Motordrehzahl rasch abnimmt, ohne dass dies mit einer entsprechenden Fahrzeugverzögerung verbunden ist. Die Kupplung kann dann abhängig von Ausgangssignalen des jeweiligen Steuergerätes und/oder weiterer, daraus abgeleiteten Signale gesteuert werden.

In einem mit einer Kupplung bzw. einer Drehmomentübertragungseinrichtung mit veränderbarem Drehmomentübertragungsvermögen ausgerüsteten Antriebsstrang können die Kupplung und die Räder schlupfen. Wenn die Kupplung haftet, d.h. an ihr kein Schlupf vorhanden ist, bestimmt der Antriebsmotor das Triebsstrangmoment und kann somit den Radschlupf kontrollieren. Wenn die Kupplung schlupft (beispielsweise beim Anfahren, Schalten oder in schlupfgeregelten Fahrsituationen) ist das Triebsstrangmoment durch das Kupplungsmoment bestimmt.

Bei automatisierten bzw. von einem Aktor betätigten Kupplungen ist das Triebsstrangmoment in Schlupfphasen modulierbar, so dass eine Radschlupfregelung in Verbindung mit einer automatisierten Kupplung auch in Phasen mit Antrieb des Fahrzeugs durch den Motor möglich ist.

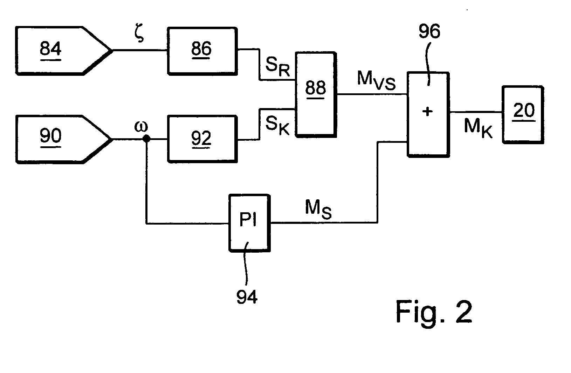

Im Folgenden wird anhand der Figur 2 das Prinzip einer beispielsweisen Schlupfregelung der Räder mittels einer automatisierten Kupplung erläutert:

Mit 84 sind Sensoren, beispielsweise Raddrehzahlsensoren, bezeichnet, die der Drehzahl $\dot{\varphi}$ von Rädern entsprechende Ausgangssignale an eine Recheneinheit 86 liefern. In der Recheneinheit 86 wird aus den Drehzahlsignalen unter zusätzlicher Plausibilisierung mit Hilfe beispielsweise der Radbeschleunigungen aus den Drehzahlsignalen der angetriebenen und der nicht angetriebenen Räder ein Radschlupf SR berechnet, der einer weiteren Recheneinheit 88 zugeführt wird. Von Sensoren 90 werden Signale $\omega$ abgeleitet, aufgrund derer in einer Recheneinheit 92 der Schlupf SK der Kupplung berechnet werden kann. Diese Berechnung ist beispielsweise unmittelbar durch Vergleich der Motordrehzahl mit der Drehzahl der Kardanwelle unter Berücksichtigung der jeweiligen Getriebeübersetzung möglich. Alternativ können beispielsweise die Drehzahlen der nicht angetriebenen Räder verwendet werden, aus denen unter Berücksichtigung der Gesamtübersetzung die Ausgangsdrehzahl der Kupplung berechnet werden kann. Der Kupplungsschlupf SK wird einem weiteren Eingang der Recheneinheit 88 zugeführt, in der das Schlupfmoment der Räder $M_{Rädr}$ bzw. das von den Rädern übertragene Moment nach folgenden Formeln berechnet werden kann:

$$J_{Trieb} * \dot{\omega}_{Trieb} = M_{Kupplung} - M_{R\ddot{a}der} \qquad \wp$$

$$\Rightarrow M_{R\ddot{a}der} = M_{Kupplung} - J_{Trieb} * \dot{\omega}_{Trieb} \qquad \otimes$$

Dabei ist die Beschleunigung des Triebstrangs (Kupplungsscheibe, Getriebe, Differential und Räder) durch dessen Massenträgheit und durch die Differenz aus Kupplungsmoment und Radmoment bestimmt. Das jeweilige von der Kupplung übertragene Moment ist aus der Stellung des Aktors 20 (Figur 1) bekannt.

Das Schlupfmoment der Räder hängt von verschiedenen Einflussgrößen ab, wie der Fahrbahnbeschaffenheit, der Beschleunigung des Fahrzeugs, den Beladungszustand des Fahrzeugs usw.

In der Recheneinheit 88 wird das Radmoment entsprechend der Formel $\otimes$ berechnet und dieses in der Schlupfphase bestimmte Radmoment wird als Vorsteuergröße MVS zur Ansteuerung des Aktors 20 bzw. der Vorsteuerung der Kupplung verwendet. Somit gilt:

$$M_{Vorst} = M_{R\ddot{a}der} \qquad \oplus$$

Dabei bietet sich an, die berechenbaren Einflussgrößen auf das Radmoment, wie die Abhängigkeit von der Fahrzeugbeschleunigung usw. zu berücksichtigen. Mit Hilfe der Vorsteuerung wird zunächst ein Gleichgewicht zwischen Kupplungsmoment und Radmoment erreicht, bei dessen Vorhandensein die Räder nicht weiter beschleunigen würden.

Der Vorsteuerung wird eine Regelung überlagert, die den Radschlupf sicher abbaut. Dabei bietet sich an, die Beschleunigung der Räder zu regeln. Dabei ist ein negativer Zielwert der Beschleunigung zu wählen, um einen Abbau des Radschlupfes zu gewährleisten. Beispielsweise kann ein PI-Regler verwendet werden, mit Hilfe dessen eine der Vorsteuergröße MVS überlagerte Steuergröße MS für die Kupplung folgendermaßen berechnet wird:

$$\dot{\omega}_{TriebZiel} < 0$$

$$M_S = p * (\dot{\omega}_{Trieb} - \dot{\omega}_{TriebZiel}) + \int i * (\dot{\omega}_{Trieb} - \dot{\omega}_{TriebZiel}) \qquad \varnothing$$

In Figur 2 ist mit 94 eine Recheneinheit bezeichnet, die die Steuergröße MS berechnet und diese als zweite Eingangsgröße einem Addierglied 96 zuführt, dessen anderer Eingang mit der Recheneinheit 88 verbunden ist. Am Ausgang des Addierglieds 96 liegt somit das Signal MK, das die Summe aus der Vorsteuergröße MVS und der Steuergröße MS ist und mit der der Aktor 20 angesteuert wird. Somit ist der Vorsteuerung eine PI-Regelung überlagert.

Die vorstehend anhand der Figur 2 erläuterte Beschleunigungsregelung kann durch eine Drehzahlregelung ersetzt werden, wenn die Zieldrehzahl der angetriebenen Räder bekannt ist, die beispielsweise aus der Drehzahl der nicht angetriebenen Räder ermittelt werden kann.

Wenn die Zielraddrehzahl bekannt ist, kann eine Erweiterung des anhand der Figur 2 erläuterten Beschleunigungsreglers erfolgen. Die Zielbeschleunigung würde dann von der Schlupfdrehzahl abhängig gemacht werden. Auf diese Weise könnte bei großen Schlupfwerten eine entsprechend große negative Sollbeschleunigung definiert werden, die bei kleineren Schlupfwerten vermindert wird. Für die Funktionalität könnten Kennlinien verwendet werden, die in der Recheneinheit 94 gespeichert sind.

Wenn der Radschlupf abgebaut ist, wird das Kupplungsmoment vorteilhaft zeitgesteuert wieder aufgebaut. Sobald dies zu einem erneuten Radschlupf führt, setzt die Regelung wieder ein.

Zusätzlich kann das maximale Kupplungsmoment, bei dem kein Radschlupf auftritt, gespeichert werden. Das Kupplungsmoment kann bis zu diesem Wert gesteigert werden, ohne dass eine erneute Radbeschleunigung auftritt.

Es ist auch möglich, die Radbeschleunigung abhängig vom nach der Formel $\otimes$ bestimmten Reib- bzw. Rad-

moment der Räder zu regeln. In diesem Fall könnte der Regler gemäß Figur 2 unter Vorgabe einer positiven Beschleunigung verwendet werden. Die Regelparameter müssten auf das geschlossene System abgestimmt bzw. umgeschaltet werden. Die Beschleunigungsvorgabe ergibt sich bei haftenden Rädern näherungsweise aus der Massenträgheit des Fahrzeugs und dem Radreibmoment nach folgender Formel:

$$M_{Trieb} = M_{Räder} = J_{Fahrzeug} * \dot{\omega}_{TriebZiel}$$

$$\Rightarrow \dot{\omega}_{TriebZiel} = M_{Räder} / J_{Fahrzeug}$$

Es versteht sich, dass die vorgenannten Steuerungen bzw. Regelungen in beliebiger Weise miteinander kombiniert werden können und dass an Stelle einer PI-Regelung auch andere Regelungen verwendet werden können.

Während der Phasen einer Schlupfregelung mit Hilfe der Kupplung ist es vorteilhaft, den Antriebsmotor derart zu steuern, dass seine Drehzahl zumindest näherungsweise konstant bleibt. Dazu kann beispielsweise das Motormoment entsprechend dem Kupplungseingriff abgesenkt werden (bei abnehmendem Kupplungsmoment wird das Motormoment entsprechend abgesenkt oder die Drehzahl des Motors wird unmittelbar geregelt).

Bei nicht schlupfender Kupplung kann grundsätzlich die Motorsteuerung die Schlupfregelung übernehmen. Gerade in Verbindung mit dem Motor- und dem Kupplungseingriff ist es vorteilhaft, die Radschlupfregelung durch den Kupplungsschlupf bzw. die Veränderung des Kupplungsmoments alleine oder in Verbindung mit dem Motoreingriff zu regeln.

Aus dem gemäß vorstehenden Ausführungen ermittelten maximalen Radmoment, bei dem noch kein Schlupf auftritt, sind Rückschlüsse auf den jeweiligen Fahrbahnzustand möglich. Unterschreitet dieses Radmoment einen gewissen Grenzwert, so können beispielsweise Fahrprogramme umgeschaltet werden, beispielsweise kann auf ein Winterprogramm geschaltet werden, bei dem mit vermindertem Kupplungsmoment bzw. Radmoment angefahren wird. Dieses Anfahren kann auch mit verminderter Anfahrdrehzahl und einem zusätzlichen, schlupfgesteuerten Eingriff in das Kupplungsmoment erfolgen.

Zusammenfassend wird unter Verwendung einer automatisierten Kupplung eine Radschlupfregelung durchgeführt, bei der in Schlupfphasen das Reibmoment der Räder bestimmt wird. Diese Information kann zum einen dazu genutzt werden, um eine Beschleunigungsregelung mittels einer Vorsteuerung zu unterstützen; zum anderen kann ein Zielwert für eine optimale Beschleunigung an der Haftgrenze der Räder festgelegt werden. Der Regler sorgt zunächst für einen kontrollierten Abbau des Radschlupfes und dann für den Aufbau der optimalen Beschleunigung.

**Bezugszeichenliste**

| | |
|---|---|
| 4 | Kraftfahrzeug |
| 6 | Antriebsmotor |
| 8 | Getriebe |
| 10 | Kupplung |
| 12 | Kardanwelle |
| 14 | Differential |
| 16 | Hinterrad |
| 18 | Betätigungshebel |
| 20 | Aktor |
| 22 | Aktor |
| 24 | Aktor |
| 26 | Getriebesteuereinheit |
| 28 | Raddrehzahlsensor |
| 30 | Raddrehzahlsensor |
| 32 | Raddrehzahlsensor |
| 34 | Raddrehzahlsensor |
| 36 | Vorderrad |

| 38 | Vorderrad |
| 40 | Wählhebel |
| 42 | Stellungsgeber |
| 44 | Motorsteuergerät |
| 46 | Sensor |
| 48 | Fahrpedal |
| 50 | Sensor |
| 51 | Positionsgeber |
| 52 | Laststellglied |
| 54 | Durchflusssensor |
| 56 | Temperatursensor |
| 58 | Aktor |
| 60 | ABS-Steuergerät |
| 62 | Bremssteuergerät |
| 64 | Bremspedal |
| 66 | Radbremse |
| 68 | Sensor |
| 70 | Bus-System |
| 84 | Sensoren |
| 86 | Recheneinheit |
| 88 | Recheneinheit |
| 90 | Sensoren |
| 92 | Recheneinheit |
| 94 | Recheneinheit |
| 96 | Addierglied |

**Patentansprüche**

1. Verfahren zum Regeln der Fahrstabilität eines Kraftfahrzeugs (4), bei welchem Verfahren abhängig vom jeweiligen Betriebszustand des Kraftfahrzeugs(4) das von einer zwischen einem Antriebsmotor (6) und angetriebenen Rädern (16) des Kraftfahrzeugs (4) angeordneten automatisierten Kupplung (10) übertragbare Moment verändert wird, wobei ein Schlupf der angetriebenen Räder (16) unmittelbar durch Steuerung des von der Kupplung übertragbaren Moments geregelt wird, wobei der Schlupf wenigstens eines angetriebenen Rades (16), der Schlupf der Kupplung (10)und das Schlupfmoment des wenigstens einen angetriebenen Rades (16) ermittelt werden, **dadurch gekennzeichnet, dass** das von der Kupplung (10) übertragbare Moments derart vorgesteuert wird, dass es dem ermittelten Schlupfmoment des wenigstens einen angetriebenen Rades (16) etwa gleich ist und der Vorsteuerung eine Regelung zum Abbau des Schlupfes des wenigstens einen angetriebenen Rades (16) überlagert wird.

2. Verfahren nach Anspruch 1, **dadurch gekennzeichnet, dass** die Regelung des Schlupfes des wenigstens einen angetriebenen Rades (16) durch Steuerung des Kupplungsmoments mit Hilfe eines PI-Reglers erfolgt.

3. Verfahren nach Anspruch 1 oder 2, **dadurch gekennzeichnet, dass** die Steuerung des Kupplungsmoments unter Regelung der Drehzahl des wenigstens einen angetriebenen Rades (16) auf eine Zieldrehzahl erfolgt.

4. Verfahren nach einem der Ansprüche 1 bis 3, **dadurch gekennzeichnet, dass** nach Abbau des Radschlupfes das Kupplungsmoment zeitgesteuert vergrößert wird und der Abbau des Radschlupfes durch Vermindern des Kupplungsmoments erneut erfolgt, sobald der Radschlupf einen vorbestimmten Wert übersteigt.

5. Verfahren nach Anspruch 4, **dadurch gekennzeichnet, dass** der Wert des maximalen Kupplungsmoments, bei dem im wesentlichen kein Radschlupf auftritt, gespeichert wird.

6. Verfahren nach Anspruch 1, **dadurch gekennzeichnet, dass** ein Steuern des von der Kupplung übertragbaren Moments derart erfolgt, dass die Winkelbeschleunigung des minestens einen angetriebenen Rades (16) einen von dem Schlupfmoment abhängigen Wert annimmt.

7. Verfahren nach einem der Ansprüche 1 bis 6, **dadurch gekennzeichnet, dass** ein Motoreingriff derart erfolgt, dass die Motordrehzahl während der Veränderung des von der Kupplung übertragbaren Moments zumindest annähernd konstant bleibt.

8. Verfahren nach einem der Ansprüche 1 bis 7, **dadurch gekennzeichnet, dass** das von dem mindestens einen angetriebenen Rades (16) übertragene Moment zur Steuerung wenigstens einer weiteren Einstellung eines Fahrzeugparameters verwendet wird.

9. Vorrichtung zum Regeln der Fahrstabilität eines Kraftfahrzeugs (4), enthaltend eine zwischen einem Antriebsmotor (6) des Kraftfahrzeugs und wenigstens einem angetriebenen Rad (16) angeordnete Kupplung (10), deren übertragbares Moment mittels eines Aktors (20) verstellbar ist,
Sensoren (28, 30, 32, 34) zur Ermittlung des Schlupfes des wenigstens einen angetriebenen Rades,
Sensoren (50, 28, 30) zur Ermittlung des Schlupfes der Kupplung und
eine elektronische Steuereinrichtung (26), die den Aktor der Kupplung zur Durchführung des Verfahrens nach einem der Ansprüche 1 bis 8 steuert.

## Claims

1. Method for regulating the driving stability of a motor vehicle (4), in which method the torque which can be transmitted by an automated clutch (10) which is arranged between a drive engine (6) and driven wheels (16) of the motor vehicle (4) is varied as a function of the respective operating state of the motor vehicle (4), with slip of the driven wheels (16) being regulated directly by controlling the torque which can be transmitted by the clutch, with the slip of at least one driven wheel (16), the slip of the clutch (10) and the slip torque of the at least one driven wheel (16) being determined, **characterized in that** the torque which can be transmitted by the clutch (10) is pilot-controlled in such a way as to be approximately equal to the determined slip torque of the at least one driven wheel (16), and with regulation for depleting the slip of the at least one driven wheel (16) being superposed on the pilot control.

2. Method according to Claim 1, **characterized in that** the regulation of the slip of the at least one driven wheel (16) takes place by controlling the clutch torque by means of a PI regulator.

3. Method according to Claim 1 or 2, **characterized in that** the clutch torque is controlled so as to regulate the rotational speed of the at least one driven wheel (16) to a target rotational speed.

4. Method according to one of Claims 1 to 3, **characterized in that**, after the depletion of the wheel slip, the clutch torque is increased in a time-controlled manner, and the depletion of the wheel slip is carried out again, by reducing the clutch torque, as soon as the wheel slip exceeds a predetermined value.

5. Method according to Claim 4, **characterized in that** the value of the maximum clutch torque at which substantially no wheel slip occurs is stored.

6. Method according to Claim 1, **characterized in that** the torque which can be transmitted by the clutch is controlled in such a way that the angular acceleration of the at least one driven wheel (16) assumes a value which is dependent on the slip torque.

7. Method according to one of Claims 1 to 6, **characterized in that** an engine intervention takes place in such a way that the engine rotational speed remains at least approximately constant during the change in the torque which can be transmitted by the clutch.

8. Method according to one of Claims 1 to 7, **characterized in that** the torque which can be transmitted by the at least one driven wheel (16) is used to control at least one further adjustment of a vehicle parameter.

9. Device for regulating the driving stability of a motor vehicle (4), comprising
a clutch (10) which is arranged between a drive engine (6) of the motor vehicle and at least one driven wheel (16), with it being possible for the torque which can be transmitted by said clutch to be adjusted by means of an actuator (20),
sensors (28, 30, 32, 34) for determining the slip of the at least one driven wheel,
sensors (50, 28, 30) for determining the slip of the clutch and
an electronic control device (26) which controls the actuator of the clutch so as to carry out the method according to one of Claims 1 to 8.

**EP 1 637 424 B1**

**Revendications**

1. Procédé pour la régulation de la stabilité de conduite d'un véhicule automobile (4), dans lequel procédé, en fonction de l'état de fonctionnement respectif du véhicule automobile (4), on peut modifier le couple pouvant être transmis par un embrayage (10) automatisé disposé entre un moteur d'entraînement (6) et les roues entraînées (16) du véhicule automobile (4), un glissement des roues entraînées (16) étant réglé immédiatement par commande du couple pouvant être transmis par l'embrayage, le glissement d'au moins une des roues entraînées (16), le glissement de l'embrayage (10) et le couple de glissement de l'au moins une roue entraînée (16) étant déterminés, **caractérisé en ce que** le couple pouvant être transmis par l'embrayage (10) est commandé initialement de telle sorte qu'il soit approximativement égal au couple de glissement déterminé de l'au moins une roue entraînée (16) et que la commande initiale soit affectée d'un réglage pour diminuer le glissement de l'au moins une roue entraînée (16).

2. Procédé selon la revendication 1, **caractérisé en ce que** le réglage du glissement de l'au moins une roue entraînée (16) s'effectue par une commande du couple d'embrayage à l'aide d'un régulateur PI.

3. Procédé selon la revendication 1 ou 2, **caractérisé en ce que** la commande du couple d'embrayage s'effectue par réglage de la vitesse de rotation de l'au moins une roue entraînée (16) à une vitesse de rotation spécifique.

4. Procédé selon l'une quelconque des revendications 1 à 3, **caractérisé en ce qu'**après la diminution du glissement de la roue, le couple d'embrayage est augmenté de manière commandée dans le temps et la diminution du glissement de la roue est répété par réduction du couple d'embrayage dès que le glissement de la roue dépasse une valeur prédéterminée.

5. Procédé selon la revendication 4, **caractérisé en ce que** la valeur du couple d'embrayage maximal, auquel il ne se produit essentiellement aucun glissement de la roue, est mémorisée.

6. Procédé selon la revendication 1, **caractérisé en ce que** l'on effectue une commande du couple pouvant être transmis par l'embrayage de telle sorte que l'accélération angulaire de l'au moins une roue entraînée (16) adopte une valeur dépendant du couple de glissement.

7. Procédé selon l'une quelconque des revendications 1 à 6, **caractérisé en ce que** l'on intervient sur le moteur de telle sorte que le régime du moteur reste au moins approximativement constant pendant la variation du couple pouvant être transmis par l'embrayage.

8. Procédé selon l'une quelconque des revendications 1 à 7, **caractérisé en ce que** le couple transmis par l'au moins une roue entraînée (16) est utilisé pour la commande d'au moins un autre ajustement d'un paramètre du véhicule.

9. Dispositif de régulation de la stabilité de conduite d'un véhicule automobile (4), contenant un embrayage (10) disposé entre un moteur d'entraînement (6) du véhicule automobile et au moins une roue entraînée (16), dont le couple transmissible peut être réglé au moyen d'un actionneur (20),
des capteurs (28, 30, 32, 34) pour déterminer le glissement de l'au moins une roue entraînée,
des capteurs (50, 28, 30) pour déterminer le glissement de l'embrayage et un dispositif de commande électronique (26), qui commande l'actionneur de l'embrayage pour mettre en oeuvre le procédé selon l'une quelconque des revendications 1 à 8.

Fig. 1

Fig. 2

**EP 1 637 424 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19850978 A1
- DE 10157506 A1
- DE 19939442 A1
- DE 4239291 A1
- DE 4239289 A1
- DE 4306505 A1